# EUROPEAN PATENT APPLICATION

(11) **EP 4 851 322 A1**
(43) Date of publication of application: **09.12.2026**
(21) Application number: 25768380.5
(22) Date of filing: 06.03.2025
(51) Int. Cl.: C22C 38/00, C21D 8/12, C22C 38/60, H01F 1/147

(54) **GRAIN-ORIENTED ELECTROMAGNETIC STEEL SHEET AND METHOD FOR MANUFACTURING SAME**

(30) Priority: 07.03.2024 JP 2024035094
(71) Applicant: JFE Steel Corporation, Tokyo 100-0011 (JP)
(72) Inventor: SHINGAKI Yukihiro, Tokyo 100-0011 (JP); SHIMOYAMA Yusuke, Tokyo 100-0011 (JP); KOKUBU Akinori, Tokyo 100-0011 (JP)
(74) Representative: Haseltine Lake Kempner LLP
(86) International application number: PCT/JP2025/008314
(87) International publication number: WO 2025/187797

(57) **Abstract**

In producing a grain-oriented electrical steel sheet using an inhibitor-less method, a grain-oriented electrical steel sheet is provided that has stable and excellent magnetic properties throughout the entire length of the coil. The grain-oriented electrical steel sheet has a chemical composition containing, in mass%, Si: 2.0 % or more but 4.5 % or less and Mn: 0.01 % or more but 0.5 % or less, and in mass ppm, Se, Te, and O: each less than 50 ppm, S: less than 30 ppm, acid-soluble Al: 2 ppm or more but less than 30 ppm, Ga: 5 ppm or more but less than 80 ppm, with the balance being iron and inevitable impurity. B₈ in the rolling direction is 1.900 T or more, and hysteresis loss W_{hys} at B = 1.7 T satisfies the following expression (1), ${W}_{hys} \leq - 2.5 \times {B}_{8} + 5.15$ (1).

## Description

### TECHNICAL FIELD

The present disclosure relates to grain-oriented electrical steel sheets and methods of producing same, and more particularly to a grain-oriented electrical steel sheet having high production stability and a method of producing same.

### BACKGROUND

For grain-oriented electrical steel sheets, a typical technique involves using precipitates called inhibitors to induce secondary recrystallization of grains having a Goss orientation during final annealing. As examples, a method using AlN is described in Patent Literature (PTL) 1, and a method using MnS and MnSe is described in PTL 2, and both have been put into practical use industrially. Further, in order to enhance the function of such inhibitors, a method utilizing Pb, Sb, Nb, Te is described in PTL 3, and a method utilizing Zr, Ti, B, Nb, Ta, V, Cr, Mo is described in PTL 4.

As lower-cost methods of producing grain-oriented electrical steel sheets are being developed, research has been progressing on techniques to induce secondary recrystallization in steel slabs without including inhibitor components. For example, the development and proposal of a technique that allows for secondary recrystallization without the inclusion of inhibitor components (inhibitor-less method) is described in PTL 5. An inhibitor-less method is a technique to use a highly purified steel and to induce secondary recrystallization through texture control.

When producing a grain-oriented electrical steel sheet by an inhibitor-less method that does not substantially contain a strong inhibitor, when trace amounts of impurity elements precipitate non-uniformly in the steel, this can lead to non-uniformity of the microstructure, preventing the formation of a stable secondary recrystallized texture. As a result, problems arise such as variations in the properties within a coil of the finally produced grain-oriented electrical steel sheet.

To address this problem, a technique for obtaining stable magnetic properties by decreasing an amount of oxides containing Ca and/or Mg that have a diameter of 1 µm to 3 µm is proposed in PTL 6. Further, a technique for obtaining stable magnetic properties throughout the entire length of a coil by appropriately controlling the form in which trace amounts of Ti exist is proposed in PTL 7.

### CITATION LIST

### Patent Literature

PTL 1: JP S40-015644 B1
PTL 2: JP S51-013469 B2
PTL 3: JP S38-008214 B1
PTL 4: JP S52-024116 A
PTL 5: JP 2000-129356 A
PTL 6: JP 2006-152387 A
PTL 7: WO 2021/045212 A1

### SUMMARY

### (Technical Problem)

In an inhibitor-less method, secondary recrystallization is induced by controlling the texture, therefore, the uniformity of the microstructure in secondary recrystallization annealing is extremely important. In particular, the precipitation of trace components can often pose a significant problem depending on conditions.

For example, an appropriate amount of Al is added as a deoxidizing material in order to decrease an amount of oxygen in steel during steelmaking, or to mitigate the effects of the annealing atmosphere during secondary recrystallization annealing. However, it is known that Al is a raw material for AlN, which affects the suppression of grain growth. The amount of nitrogen is also sufficiently decreased, and therefore the amount of precipitation is extremely small, and it is considered difficult to fully utilize as an inhibitor during secondary recrystallization annealing. On the other hand, N may affect grain growth in primary recrystallization annealing, which is carried out at relatively low temperatures and for a short time. Because these elements are added in extremely small amounts, they tend to precipitate unevenly, which is expected to contribute to the instability of the magnetic properties in the coil.

It would be helpful to provide a grain-oriented electrical steel sheet that has stable and excellent magnetic properties throughout the entire length of the coil when produced using an inhibitor-less method.

### (Solution to Problem)

In order to solve the above problems, the inventors evaluated the characteristics of materials that frequently exhibited large variations in magnetic properties within a coil in actual production. As a result, it became clear that the non-uniform precipitation of Al content in steel promotes non-uniformity of the microstructure and destabilizes the behavior of secondary recrystallization, and this is one factor causing variation in magnetic properties within a coil.

Therefore, the inventors conducted intensive studies into methods to prevent the non-uniform precipitation of Al added in trace amounts. MnS is a precipitate that is actively used in grain-oriented electrical steel sheets. It is known that good magnetic properties can be obtained when Se, an element in the same group as S in the periodic table, is added. This utilizes the fact that MnS and MnSe can form precipitates with the same morphology (crystal structure), and that each element influences the precipitation of the other.

Therefore, based on the above discovery, the inventors considered whether the precipitation of trace amounts of Al could be controlled by the combined addition of Al and Ga, an element in the same group as Al. Both AlN and GaN can take on two types of crystal structures, wurtzite structure and zinc blende structure, and can exist in states such as AlGaN, and therefore the relationship between AlN and GaN can be regarded as being very similar to the relationship between MnS and MnSe.

Therefore, the inventors decided to proceed with studies to control the amount of Ga according to the amount of Al. Al is used as a deoxidizing material during steelmaking, and therefore both acid-soluble Al and insoluble Al as an oxide are present. Here, acid-soluble Al, which is thought to function as a precipitate, was targeted for study. As a result, it was observed that mixing Ga in an atomic weight ratio of 3 % to 100 % of the Al amount tended to decrease variation in magnetic properties within the coil.

It is not clear whether the above results are due to the assumed mechanism, but it may be considered that, as with MnS and MnSe, one material acts as a precipitation nucleation site for the other, resulting in a more uniform distribution of precipitates within the coil. Further, it may be considered that the formation of a complex precipitate after precipitation suppresses Ostwald ripening and improves localization due to the coarsening of the precipitates.

Thus, the inventors discovered that by adding an appropriate amount of Ga according to the amount of Al added to the steel sheet, non-uniform precipitation of Al can be suppressed, and a grain-oriented electrical steel sheet having stable and excellent magnetic properties throughout the entire length of the coil can be obtained, thus leading to the present disclosure.

Primary features of the present disclosure are as follows.
[1] A grain-oriented electrical steel sheet having a chemical composition containing (consisting of), in mass%, Si: 2.0 % or more but 4.5 % or less and Mn: 0.01 % or more but 0.5 % or less, and in mass ppm, Se, Te, and O: each less than 50 ppm, S: less than 30 ppm, acid-soluble Al: 2 ppm or more but less than 30 ppm, Ga: 5 ppm or more but less than 80 ppm, with the balance being iron and inevitable impurity,
   wherein B₈ in the rolling direction is 1.900 T or more, and hysteresis loss W_{hys} at B = 1.7 T satisfies the following expression (1), ${W}_{hys} \leq - 2.5 \times {B}_{8} + 5.15$ (1)
[2] The grain-oriented electrical steel sheet according to [1], the chemical composition further containing, in mass%, one or more selected from the group consisting of
   Ni: 1.50 % or less, Sn: 0.50 % or less, Sb: 0.50 % or less, Cu: 0.50 % or less, P: 0.50 % or less, Cr: 1.50 % or less, Mo: 0.50 % or less, B: 0.0050 % or less, Nb: 0.0100 % or less, Co: 0.0100 % or less, Ti: 0.0050 % or less, Zn: 0.050 % or less, Bi: 0.0200 % or less, W: 0.0030 % or less, Pb: 0.0010 % or less, Ge: 0.0010 % or less, As: 0.0010 % or less, and Ag: 0.0010 % or less.
[3] A method of producing the grain-oriented electrical steel sheet according to [1] or [2], the method comprising:
   casting a steel slab from molten steel having a chemical composition containing (consisting of), in mass%, C: 0.08 % or less, Si: 2.0 % or more but 4.5 % or less, Mn: 0.01 % or more but 0.5 % or less, and in mass ppm, Se, Te and O: each less than 50 ppm, acid-soluble Al: 20 ppm or more but less than 100 ppm, S: less than 50 ppm, N: 80 ppm or less, and Ga in an amount relative to the concentration of acid-soluble Al, according to the following expression (2), $0.030 \times Al \times 2.58 \leq Ga \leq 1.000 \times Al \times 2.58$ (2)
   with the balance being Fe and inevitable impurity; hot rolling the steel slab to obtain a hot-rolled sheet; subjecting the hot-rolled sheet to annealing and rolling to obtain a cold-rolled sheet having a final sheet thickness; subsequently carrying out primary recrystallization annealing; further carrying out secondary recrystallization annealing; and subsequently forming an insulating coating,
   wherein the secondary recrystallization annealing is carried out such that, in a heating process, a residence time in a temperature range from 800 °C to 900 °C is 35 h or longer in a N₂ atmosphere, an Ar atmosphere, or a mixed atmosphere of N₂ and Ar, soaking is carried out at a maximum temperature exceeding 1150 °C for 3 h or longer in an atmosphere containing 5 vol% or more of H₂, and, in a cooling process, a residence time in a temperature range from 1100 °C to 900 °C is 10 h or longer.
[4] The method of producing the grain-oriented electrical steel sheet according to [3], the chemical composition further containing, in mass%, one or more selected from the group consisting of
   Ni: 1.50 % or less, Sn: 0.50 % or less, Sb: 0.50 % or less, Cu: 0.50 % or less, P: 0.50 % or less, Cr: 1.50 % or less, Mo: 0.50 % or less, B: 0.0050 % or less, Nb: 0.0100 % or less, Co: 0.0100 % or less, Ti: 0.0050 % or less, Zn: 0.050 % or less, Bi: 0.0200 % or less, W: 0.0030 % or less, Pb: 0.0010 % or less, Ge: 0.0010 % or less, As: 0.0010 % or less, and Ag: 0.0010 % or less.

### (Advantageous Effect)

According to the present disclosure, in producing a grain-oriented electrical steel sheet using an inhibitor-less method, it is possible to provide a grain-oriented electrical steel sheet that has stable and excellent magnetic properties throughout the entire length of the coil.

### BRIEF DESCRIPTION OF THE DRAWINGS

In the accompanying drawings:

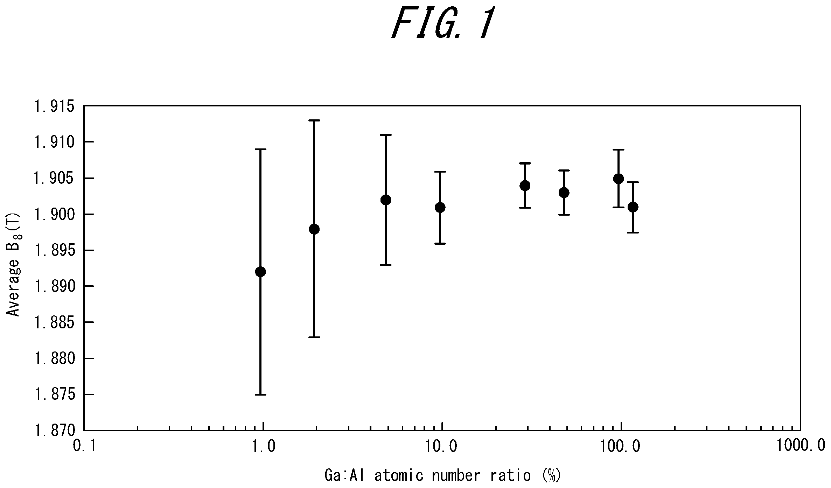

FIG. 1 illustrates a relationship between an atomic ratio of Ga to Al and an average value of B₈.

### DETAILED DESCRIPTION

Examples of embodiments of the present disclosure are described in detail below. The following description exemplifies embodiments of the present disclosure, and the present disclosure is not limited to the following embodiments in any way.

According to the present disclosure, a steel slab for a grain-oriented electrical steel sheet (hereinafter sometimes simply referred to as a steel slab) cast from molten steel having the following chemical composition is used as the starting material. In the following description of chemical composition, unless otherwise specified, "%" represents "mass%" and "ppm" represents "mass ppm".

### C: 0.08 % or less

C suppresses crystal grain coarsening during hot rolling and improves the pre-cold-rolled microstructure. In cold rolling, C improves the texture after primary recrystallization by interaction with dislocations. However, when remaining in the steel sheet as a finished product, C causes magnetic aging and magnetic deterioration. When C content exceeds 0.08 %, the load on the decarburization process increases, and the C content cannot be sufficiently decreased. The C content is therefore limited to 0.08 % or less. Further, in order to obtain the texture improvement effect, the C content is preferably 0.01 % or more.

### Si: 2.0 % or more but 4.5 % or less

Si is a useful element that increases the electrical resistance of the steel and decreases iron loss. When Si content is less than 2.0 %, a sufficient decrease in iron loss cannot be expected. On the other hand, when the Si content exceeds 4.5 %, cold rolling becomes extremely difficult. The Si content is therefore limited to the range of 2.0 % to 4.5 %.

### Mn: 0.01 % or more but 0.5 % or less

Mn is a useful element for improving hot workability. When Mn content exceeds 0.5 %, the primary recrystallized texture degrades, making it difficult to obtain secondary recrystallized grains that are highly concentrated in the Goss orientation. The Mn content is therefore limited to a range of 0.5 % or less. Further, in order to improve hot workability, the Mn content needs to be 0.01 % or higher. The Mn content is preferably 0.02 % or more. The Mn content is preferably 0.3 % or less.

### Se, Te, and O: each less than 50 ppm

When Se and Te are present in excess, selenides and tellurides are formed, making secondary recrystallization difficult. The reason for this is that the precipitates coarsened by slab heating make the primary recrystallized texture non-uniform. Therefore, to avoid them acting as inhibitors, Se content and Te content are controlled to each be less than 50 ppm. The Se content and the Te content are each preferably 30 ppm or less. Further, O forms oxides that remain as inclusions in the final product, degrading magnetic properties. O content therefore needs to be controlled to less than 50 ppm. The content of these elements, Se, Te, and O, may be 0 %.

### Acid-soluble Al: 20 ppm or more but less than 100 ppm, S: less than 50 ppm, N: 80 ppm or less

When an inhibitor-less method is applied, these precipitate-forming elements are not necessary when only secondary recrystallization is considered. However, Al is effective as a deoxidizing material in the smelting process in order to decrease problems arising from inclusions. Further, by including an appropriate amount of Al, a dense Al₂O₃ film is formed on the surface during secondary recrystallization annealing, decreasing the influence of nitriding and the like from the atmosphere. The content of acid-soluble Al is therefore preferably 20 ppm or more. The content of acid-soluble Al is therefore preferably less than 100 ppm. Further, when S content and N content are respectively 50 ppm or more and more than 80 ppm, precipitates formed during slab heating coarsen, similarly to Se and Te, degrading the primary recrystallized texture. The S content and the N content are therefore limited to less than 50 ppm and 80 ppm or less, respectively. On the other hand, while it is preferable for the S content and the N content to be 0 %, these are elements that are difficult to completely remove, and actually decreasing the S content to less than 10 ppm and the N content to less than 20 ppm would lead to a significant increase in production costs. The S content is therefore preferably 10 ppm or more. The N content is therefore preferably 20 ppm or more. This decreases the burden when producing the grain-oriented electrical steel sheet using an inhibitor-less method that aims to produce a high-quality grain-oriented electrical steel sheet at low cost.

### Ga: relative to concentration of acid-soluble Al, 0.030 × Al × 2.58 ≤ Ga ≤ 1.000 × Al × 2.58

According to the present disclosure, the addition of Ga in proportion to the amount of acid-soluble Al added is essential. Ga has a high boiling point but a low melting point, and is therefore difficult to add as metallic Ga. At the laboratory level, various Ga concentrations can be implemented by adding metallic Ga. However, in normal refining processes, it is preferable to add Ga by using Al that contains Ga, when adding Al, or by using scrap that contains a certain amount of Ga. However, there are currently technical challenges in adding high concentrations of Ga. Using an electric arc furnace process that utilizes low-temperature scrap or iron sources as raw material makes it relatively easier compared to a typical blast furnace-converter process.

The amount of Ga added is determined according to the amount of acid-soluble Al added. The effect of stabilizing magnetic properties was observed when the amount added was 3.0 % or more in terms of atomic number relative to the amount of acid-soluble Al added. There is approximately a 2.58-fold difference in atomic weight between Al and Ga, and therefore the target amount added in mass% is calculated by multiplying these two values. Although the mechanism by which the appropriate range for Ga addition occurs is not clear, a relationship with the amount of Al addition has been confirmed, suggesting that complex precipitation with Al is likely the cause. It may be considered that the effect is insufficient at concentrations less than 3.0 % relative to the Al content. On the other hand, regarding the upper limit, from a properties viewpoint, although the degree of effect saturates, increasing the amount added does not cause degradation. However, considering that Ga is more expensive than Al as a raw material, there is no reason to actively add Ga in ranges where the effect is small. Further, embrittlement behavior is observed. The Ga content, in terms of atomic number relative to the amount of Al added, is therefore preferably 100.0 % or less. The Ga content is more preferably 50.0 % or less. The Ga content is even more preferably 30.0 % or less.

Although the required components and controlled components have been described above, according to the present disclosure, one or more other elements described below may be included as appropriate.

### Ni: 1.50 % or less

Ni serves to increase uniformity of the texture of the hot-rolled sheet, and thus improve magnetic properties. The additive effect is achieved when Ni content is 0.005 % or higher. On the other hand, when the Ni content exceeds 1.50 %, the secondary recrystallization becomes unstable, and the magnetic properties degrade. The Ni content is therefore preferably in the above range.

### Sn: 0.50 % or less, Sb: 0.50 % or less, Cu: 0.50 % or less

Sn, Sb, and Cu are elements sometimes regarded as auxiliary inhibitors through grain boundary segregation, but may be useful in an inhibitor-less method that does not actively utilize inhibitors by precipitation. The effects of addition are realized when Sn content, Sb content, and Cu content are 0.01 % or more, 0.005 % or more, and 0.01 % or more, respectively. On the other hand, exceeding the upper limits increases the likelihood of secondary recrystallization failure. The Sn content, Sb content, and Cu content are therefore preferably in the above ranges.

### P: 0.50 % or less, Cr: 1.50 % or less

P and Cr each have an effect of improving a reaction during the formation of forsterite film. The effects of addition are realized when P content and Cr content are 0.0050 % or more and 0.01 % or more, respectively. On the other hand, when the P content and Cr content exceed 0.50 % and 1.50 %, respectively, the formation of the forsterite film is excessively promoted, resulting in problems such as the film peeling off. The P content and Cr content are therefore preferably in the above ranges.

### Mo: 0.50 % or less, B: 0.0050 % or less, Nb: 0.0100 % or less

Mo, B, and Nb all contribute to inhibiting grain growth and have the effects of improving texture and stabilizing secondary recrystallization. The effects of addition are realized when Mo content, B content, and Nb content are 0.01 % or more, 0.0001 % or more, and 0.0005 % or more, respectively. On the other hand, when Mo, B, and Nb are added in excess, they precipitate and function as strong inhibitors. Therefore, in an inhibitor-less method, the Mo content, B content, and Nb content are preferably at or less than the above upper limits.
Co: 0.0100 % or less
Ti: 0.0050 % or less
Zn: 0.050 % or less
Bi: 0.0200 % or less
W: 0.0030 % or less
Pb, Ge, As, Ag: each 0.0010 % or less

In inhibitor-less methods, controlling grain size through precipitates is difficult. Therefore, by using grain boundary segregation elements, grain growth can be controlled to some extent, thereby improving magnetic properties. Further, elements having significantly different atomic sizes also have the effect of suppressing grain boundary migration. Elements that have a function of suppressing grain growth and grain boundary migration include Co, Ti, Zn, Bi, W, Pb, Ge, As, and Ag. The effect of addition is realized when Co: 0.0005 % or more, Ti: 0.0010 % or more, Zn: 0.0001 % or more, Bi: 0.0005 % or more, W: 0.0001 % or more, and Pb, Ge, As, and Ag: each 0.0001 % or more. These elements can therefore be included in the above ranges. These elements can be used individually or in combination, primarily to improve magnetic flux density.

The balance preferably consists of iron and impurities other than those mentioned above, particularly inevitable impurity.

The steel slab having the chemical composition adjusted to the ranges described above is cast. Steel with added Ga may be somewhat brittle when hot, and therefore when casting a slab thickness exceeding the normal 200 mm, a caster that minimizes extreme bending is preferably used. Further, when the bending of the caster is significant and breakout may occur, a medium-thickness slab having a slab thickness of 30 mm to 180 mm may be used.

The cast steel slab is subjected to hot rolling, either without reheating or after reheating, to produce a hot-rolled sheet. In the case of reheating the steel slab, the reheating temperature is preferably about 1100 °C or higher. The reheating temperature is preferably about 1300 °C or lower. Slab heating above 1300 °C is unnecessary and meaningless according to the present disclosure, as the steel slab contains almost no inhibitor, and such slab heating would increase costs.

When the steel slab is subjected to rough rolling directly after casting, the rough rolling is preferably started when the slab surface temperature is in a range from 900 °C to 1150 °C. When the steel slab surface layer is not cooled sufficiently, a breakout may occur in a steel slab central portion where unsolidified molten steel breaks through a surface solidification layer and flows out. However, in the inhibitor-less chemical composition used according to the present disclosure, concerns such as precipitation of inhibitor components due to low temperatures are minimal. Therefore, it is possible to cool the steel slab to 1200 °C or lower while also suppressing the precipitation of inhibitor components in the steel slab, thereby enabling more stable production of the grain-oriented electrical steel sheet.

Subsequently, the hot-rolled sheet is subjected to hot-rolled sheet annealing as required, and then cold rolled once or twice or more with intermediate annealing in between, to obtain a cold-rolled sheet. The cold rolling may be carried out at room temperature. Alternatively, the cold rolling may be warm rolling where rolling is carried out with the steel sheet temperature raised to a temperature higher than room temperature, for example around 250 °C.

Next, the cold-rolled sheet is subjected to primary recrystallization annealing. The purpose of primary recrystallization annealing is to cause the cold-rolled sheet, which has a rolled microstructure, to undergo primary recrystallization to a primary recrystallized grain size that is optimally adjusted for secondary recrystallization. Another purpose is to decarburize carbon contained in the steel by using a wet hydrogen-nitrogen atmosphere or wet hydrogen-argon atmosphere, and at the same time, to form an oxide film on the surface by using the annealing atmosphere. For this purpose, the annealing temperature (holding temperature) of primary recrystallization annealing is preferably approximately 800 °C or higher. The annealing temperature is preferably lower than 950 °C. Further, in order to further improve the texture, it is effective to increase the heating rate in the heating process of primary recrystallization annealing. Specifically, the heating rate in the temperature range from 500 °C to 700 °C is preferably 80 °C/s or more. This can lead to improvement in texture.

After the primary recrystallization annealing described above, an annealing separator is applied to the steel sheet surface. In order to form a forsterite film on the steel sheet surface after secondary recrystallization annealing, magnesia (MgO), for example, can be used as the main component of the annealing separator. The formation of the forsterite film can be further facilitated by adding an appropriate amount of Ti oxide, Sr compound, or the like to the separator.

Following the application of the annealing separator, secondary recrystallization annealing (final annealing) is carried out to form a forsterite film and carry out secondary recrystallization. The secondary recrystallization annealing is preferably carried out such that, in a heating process, a residence time in a temperature range from 800 °C to 900 °C is 35 h or longer in a N₂ atmosphere, an Ar atmosphere, or a mixed atmosphere of N₂ and Ar, in each case without H₂, soaking is carried out at a maximum temperature exceeding 1150 °C for 3 h or longer in an atmosphere containing 5 vol% or more of H₂, and, in a cooling process, a residence time in a temperature range from 1100 °C to 900 °C is 10 h or longer.

As described above, secondary recrystallization annealing results in Al in the steel being precipitated in a complex state with Ga, making it more difficult to remove from the steel than usual. When remaining in excess, this can cause degradation of the product sheet due to hysteresis loss. When MgO is used as an annealing separator, oxidation of the steel sheet progresses during annealing. However, at this time, some of the Al in the steel is removed by forming Al₂O₃ at the surface layer. To appropriately obtain this Al removal effect, it is necessary to have a residence time in a temperature range from 800 °C to 900 °C of 35 h or longer in a N₂ atmosphere, an Ar atmosphere, or a mixed atmosphere of N₂ and Ar.

Further, when high-temperature annealing is carried out in an atmosphere containing H₂, a forsterite film is formed on the steel sheet surface, and impurity components including Ga are removed by using the interface between the steel sheet and the forsterite film as a precipitation site. To achieve this effect, soaking is required at a maximum temperature exceeding 1150 °C for 3 h or more in an atmosphere containing at least 5 vol% H₂. By implementing the heat pattern described above, grain growth progresses during secondary recrystallization, resulting in an average grain size of 15 mm or more in the rolling direction and an average grain size of 10 mm or more in the direction perpendicular to the rolling direction.

Further, for Al and Ga that could not be completely removed by high-temperature soaking treatment, the impact on hysteresis loss can be decreased by actively causing coarse precipitation during the cooling process. In particular, the residence time in the temperature range from 1100 °C to 900 °C during the cooling process is important, and by ensuring a residence time of 10 h or longer in this temperature range, improvement in hysteresis loss can be expected. In compositions containing both Al and Ga as slab components, there were many cases where hysteresis loss rather than total iron loss degraded relative to the resulting magnetic flux density. However, by utilizing the above heat pattern, it becomes possible to produce the grain-oriented electrical steel sheet that contains Ga while the hysteresis loss W_{hys} at B = 1.7 T satisfies ${W}_{hys} \leq - 2.5 \times {B}_{8} + 5.15 .$ According to the present disclosure, the grain-oriented electrical steel sheet has little variation in magnetic properties within a coil, and therefore from the viewpoint of economic efficiency, final annealing is preferably carried out for a coil weighing 5 tonnes or more. Final annealing is more preferably carried out for a coil weighing 10 tonnes or more.

After the final annealing, an insulating coating may be further applied to the steel sheet surface and baked. Such an insulating coating is not limited to a particular type, and any conventionally known insulating coating is applicable. For example, a preferred method is described in JP S50-079442 A and JP S48-039338 A, where a coating solution containing phosphate-chromate-colloidal silica is applied on a steel sheet and then baked at a temperature of around 800 °C.

The resulting final product has a chemical composition containing, after purification during final annealing, in mass%, Si: 2.0 % or more but 4.5 % or less, Mn: 0.01 % or more but 0.5 % or less, and in the base steel sheet with the insulating coating and the base film removed, Se, Te, and O: each less than 50 ppm, S: less than 30 ppm, acid-soluble Al: 2 ppm or more but less than 30 ppm, and Ga: 5 ppm or more but less than 80 ppm, with the balance being iron and inevitable impurity. The resulting grain-oriented electrical steel sheet has B₈ in the rolling direction of 1.900 T or more and a hysteresis loss W_{hys} at B = 1_{.7} T that satisfies W_{hys} ≤ -2.5 × B₈ + 5.15. Further, C and N do not need to remain in the product sheet but are inevitable impurities and the less of each there is, the better. From the viewpoint of preventing magnetic aging, C content in the base steel sheet is preferably 50 ppm or less. The C content is more preferably 30 ppm or less. The C content is even more preferably 20 ppm or less. N content in the base steel sheet is preferably 50 ppm or less. The N content is more preferably 30 ppm or less. The N content is even more preferably 20 ppm or less.

Further, when one or more selected from Ni, Sn, Sb, Cu, P, Cr, Mo, B, Nb, Co, Ti, Zn, Bi, W, Pb, Ge, As, and Ag are contained in the above-mentioned amounts, the chemical composition further contains one or more selected from Ni: 1.50 % or less, Sn: 0.50 % or less, Sb: 0.50 % or less, Cu: 0.50 % or less, P: 0.50 % or less, Cr: 1.50 % or less, Mo: 0.50 % or less, B: 0.0050 % or less, Nb: 0.0100 % or less, Co: 0.0100 % or less, Ti: 0.0050 % or less, Zn: 0.050 % or less, Bi: 0.0200 % or less, W: 0.0030 % or less, Pb: 0.0010 % or less, Ge: 0.0010 % or less, As: 0.0010 % or less, and Ag: 0.0010 % or less, with the balance being iron and inevitable impurity. The resulting grain-oriented electrical steel sheet has B₈ in the rolling direction of 1.900 T or more, and the hysteresis loss W_{hys} at B = 1.7 T satisfies W_{hys} ≤ -2.5 × B₈ + 5.15.

To evaluate variation in the magnetic properties of the coil, Epstein test pieces are taken from a coil width center portion every 500 m, with the origin being where an end 100 m along the longitudinal direction of the coil is cut off. The magnetic flux density (B₈) at a magnetization force of 800 A/m is measured for each sampled position, and the standard deviation of B₈ obtained for each position along the coil is used as the amount of variation.

Further, regarding other added elements, depending on final annealing conditions, elements may be incorporated into the forsterite film or released into a gas phase, resulting in a decrease of content in the steel, and therefore concentration may decrease from that of the slab content.

### EXAMPLES

### (Example 1)

When melting steel having the following composition: C: 0.05 %, Si: 3.3 %, Mn: 0.05 %, Cr: 0.03 %, P: 0.02 %, S: 20 ppm, N: 30 ppm, and acid-soluble Al: 40 ppm, metallic Ga was added in the laboratory, and vacuum steel ingots containing the various Ga amounts listed in Table 1 were produced. Next, each steel ingot was heated to 1200 °C and hot rolled to a sheet thickness of 2 mm. Next, from each steel ingot, 50 hot-rolled sheets, each 100 mm wide and 300 mm long, were used as test materials and subjected to hot-rolled sheet annealing at 1000 °C for 50 s. Subsequently, cold rolling was carried out to a final sheet thickness of 0.27 mm, and annealing for decarburization and primary recrystallization. Next, an annealing separator mainly composed of MgO was applied to the steel sheet surface, and annealing was carried out, including a secondary recrystallization process and a purification process. In this annealing, in a heating process, soaking was carried out in a N₂ atmosphere at 850 °C for 40 h, followed by soaking in a mixed gas atmosphere of H₂:N₂ = 25:75 at 1200 °C for 5 h. In a subsequent cooling process, the cooling rate in the temperature range from 1100 °C to 900 °C was 10 °C/h, resulting in a residence time of 20 h. The steel sheet surface was coated with an insulating coating consisting of 60 % colloidal silica and aluminum phosphate, and then baked at 800 °C. The C and N content of the product sheets was 30 ppm or less in all cases.

Epstein test pieces were cut from the test material obtained from the 50 hot-rolled sheets, and the magnetic flux density (B₈) and hysteresis loss (W_{hys}) at a magnetic flux density of 1.7 T were measured. Further, the standard deviation of B₈ (50 measurement positions) obtained from each test material was evaluated as the amount of variation. The results are listed in Table 1. After the magnetic property measurement, the coating on the test pieces was removed by pickling, and then the steel composition was also analyzed. As is clear from the results, when Ga is added in an atomic number ratio of 3.0 % or more relative to Al (hereinafter also referred to as the "Ga:Al atomic number ratio"), the amount of B₈ variation decreases. Among the test pieces having a Ga:Al atomic number ratio of 48.4 %, one out of 50 test pieces was damaged during production, and the product properties thereof were not evaluated. Further, among the test pieces having a Ga:Al atomic number ratio of 96.9 %, two out of 50 test pieces were damaged during production, and the product properties thereof were not evaluated. Further, among the test pieces having a Ga:Al atomic number ratio of 116.3 %, five test pieces were similarly damaged during the production, and the final magnetic properties thereof were not evaluated.

**Table 1**

| Steel No. | Tapped steel composition | | | Properties of product sheet | | | | | Remarks | |
|---|---|---|---|---|---|---|---|---|---|---|
| | Acid-soluble Al (mass ppm) | Ga (mass ppm) | Ga:Al atomic number ratio (%) | Acid-soluble Al (mass ppm) | Ga (mass ppm) | Average value of B₈ (T) | Variation of B₈ (T) | W_{hys} (W/kg) | | |
| 1 | 40 | 1 | 1.0 | 5 | 1 | 1.892 | 0.017 | 0.42 | | Comparative Example |
| 2 | 40 | 2 | 1.9 | 6 | 2 | 1.898 | 0.015 | 0.40 | | Comparative Example |
| 3 | 40 | 5 | 4.8 | 4 | 5 | 1.902 | 0.009 | 0.38 | | Example |
| 4 | 40 | 10 | 9.7 | 5 | 8 | 1.901 | 0.005 | 0.37 | | Example |
| 5 | 40 | 30 | 29.1 | 5 | 16 | 1.904 | 0.003 | 0.37 | | Example |
| 6 | 40 | 50 | 48.4 | 4 | 43 | 1.903 | 0.003 | 0.39 | 1 damaged sample | Example |
| 7 | 40 | 100 | 96.9 | 3 | 76 | 1.905 | 0.004 | 0.38 | 2 damaged samples | Example |
| 8 | 40 | 120 | 116.3 | 6 | 98 | 1.901 | 0.004 | 0.40 | 5 damaged samples | Comparative Example |

| | | | | | | | | | | |
|---|---|---|---|---|---|---|---|---|---|---|
| Note: underlining indicates a value outside the scope of the present disclosure. | | | | | | | | | | |

### (Example 2)

Scrap containing a trace amount of Ga as raw material was melted in an electric furnace to a target composition of C: 0.055 %, Si: 3.2 %, Mn: 0.07 %, Cr: 0.01 %, P: 0.03 %, S: 15 ppm, N: 35 ppm, and acid-soluble Al: 20 ppm or more but less than 100 ppm, thereby obtaining cast slabs having the chemical compositions listed in Table 2. Next, the obtained cast slabs were heated, and when the slab surface temperature reached 1120 °C, hot rolling was started to produce hot-rolled sheets having a sheet thickness of 2 mm. Next, the obtained hot-rolled sheets (hot-rolled coils) were subjected to hot-rolled sheet annealing at 1050 °C for 30 s. Subsequently, cold rolling was carried out to a final sheet thickness of 0.23 mm, and annealing for decarburization and primary recrystallization. Subsequently, an annealing separator mainly composed of MgO was applied, and each sheet coiled into a coil having a total weight of 8 tonnes. Annealing was then carried out, including a secondary recrystallization process and a purification process. In the secondary recrystallization annealing, an intermediate soaking treatment was carried out at 850 °C during the heating process. Further, the conditions for soaking treatment at the maximum temperature of annealing and cooling were controlled to the conditions listed in Table 2. The steel sheet surface was coated with an insulating coating consisting of 60 % colloidal silica and aluminum phosphate, and then baked at 830 °C. To measure variation in the magnetic properties of the coil, Epstein test pieces were taken from a coil width center portion every 500 m, with the origin being where an end 100 m along the longitudinal direction of the coil was cut off. The magnetic flux density (B₈) and hysteresis loss (W_{hys}) at a magnetic flux density of 1.7 T were measured for each sampled position. Further, the standard deviation of B₈ obtained for each position along the coil was evaluated as a variable. The results are listed in Table 2. After the magnetic property measurement, the coating on the test pieces was removed by pickling, and then the steel composition was also analyzed. As indicated in Table 2, it was confirmed that the steel sheets according to the present disclosure exhibited good magnetic properties. The C and N content of the product sheets was 30 ppm or less in all cases.

### [Table 2]

**Table 2**

| Steel No. | Tapped steel composition | | | Secondary recrystallization annealing | | | | | Properties of product sheet | | | | | Remarks |
|---|---|---|---|---|---|---|---|---|---|---|---|---|---|---|
| | Acid-soluble Al (mass ppm) | Ga (mass ppm) | Ga:Al atomic number ratio (%) | 850 °C soaking treatment | | Maximum temperature soaking treatment | | Cooling process | Average value of B₈ (T) | Variation of B₈ (T) | Acid-soluble Al (mass ppm) | Ga (mass ppm) | W_{hys} (W/kg) | |
| | | | | Atmosphere | Time | Atmosphere | Temperature × time | Residence time from 1100 °C to 900 °C | | | | | | |
| 9 | 80 | 2 | 1.0 | N₂ | 40 h | H₂: 10% | 1200 °C × 8 h | 25 h | 1.893 | 0.017 | 25 | 2 | 0.41 | Comparative Example |
| 10 | 40 | 10 | 9.7 | N₂ | 40 h | H₂: 25% | 1200 °C × 5 h | 20 h | 1.901 | 0.005 | 5 | 8 | 0.38 | Example |
| 11 | 60 | 8 | 5.2 | H₂ | 40 h | H₂: 25% | 1200 °C × 5 h | 20 h | 1.902 | 0.011 | 40 | 7 | 0.41 | Comparative Example |
| 12 | 80 | 8 | 3.9 | N₂ | 40 h | H₂: 0% | 1150 °C × 3 h | 15 h | 1.903 | 0.010 | 35 | 8 | 0.42 | Comparative Example |
| 13 | 50 | 10 | 7.8 | N₂ | 40 h | H₂: 25% | 1200 °C × 5 h | 9 h | 1.902 | 0.010 | 15 | 7 | 0.42 | Comparative Example |
| 14 | 70 | 7 | 3.9 | N₂ | 33 h | H₂: 5% | 1150 °C × 3 h | 10h | 1.903 | 0.010 | 35 | 7 | 0.42 | Comparative Example |
| 15 | 80 | 11 | 5.3 | N₂ | 35 h | H₂: 5% | 1140 °C × 2 h | 10h | 1.901 | 0.011 | 40 | 9 | 0.42 | Comparative Example |
| 16 | 70 | 10 | 5.5 | N₂ | 35 h | H₂: 5% | 1150 °C × 15 h | 25 h | 1.906 | 0.004 | 7 | 6 | 0.36 | Example |
| 17 | 80 | 11 | 5.3 | N₂ | 55 h | H₂: 50% | 1250 °C × 15 h | 10h | 1.907 | 0.003 | 7 | 6 | 0.38 | Example |
| 18 | 70 | 8 | 4.4 | N₂ | 55 h | H₂: 50% | 1250 °C × 3 h | 25 h | 1.906 | 0.004 | 6 | 6 | 0.36 | Example |
| 19 | 105 | 10 | 3.7 | N₂ | 35 h | H₂: 5% | 1150 °C × 3 h | 10h | 1.825 | 0.048 | 55 | 9 | 0.62 | Comparative Example |

| | | | | | | | | | | | | | | |
|---|---|---|---|---|---|---|---|---|---|---|---|---|---|---|
| Note: underlining indicates a value outside the scope of the present disclosure. | | | | | | | | | | | | | | |

### (Example 3)

Steel slabs were produced to have a chemical composition with C: 0.06 %, Si: 3.35 %, and Mn: 0.03 % as main components in addition to other components listed in Table 3. During the Al component adjustment, the amount of Ga was adjusted by using an alloy containing a trace amount of Ga. Next, the obtained steel slabs were heated to 1250 °C and then hot rolled under typical conditions to produce hot-rolled sheets (hot-rolled coils) each having a thickness of 2.5 mm. Next, the obtained hot-rolled coils were annealed at 900 °C, cold rolled to 1.3 mm, and then subjected to intermediate annealing. Intermediate annealing was carried out at 1050 °C. After annealing, the coils were cold rolled to a final sheet thickness of 0.23 mm and then subjected to annealing for decarburization and primary recrystallization. Subsequently, an annealing separator mainly composed of MgO was applied to the steel sheet surface, and final annealing was carried out, including a secondary recrystallization process and a purification process. The final annealing included soaking in an Ar atmosphere at 850 °C for 40 h, followed by soaking in a mixed gas atmosphere of H₂:N₂ = 25:75 at 1200 °C for 10 h. In the cooling process, in the temperature range from 1100 °C and 900 °C, the cooling rate was 10 °C/h, resulting in a residence time of 20 h in the temperature range. The obtained coils were coated with a coating solution containing phosphate-chromate-colloidal silica in a weight ratio of 3:1:2, and then subjected to flattening annealing at 850 °C for 30 s.

To measure variation in the magnetic properties of the coil, test pieces were taken from a coil width center portion every 500 m so that the total weight was 500 g or more, with the origin being where an end 100 m along the longitudinal direction of the coil was cut off. The magnetic flux density (B₈) and hysteresis loss (W_{hys}) at a magnetic flux density of 1.7 T were measured for each sampled position using the Epstein test specified in JIS C2550. Further, the standard deviation of B₈ obtained for each position along the coil was evaluated as a variable. The results are listed in Table 3. After the magnetic property measurement, the coating on the test pieces was removed by pickling, and then the steel composition was also analyzed. As indicated in Table 3, it was confirmed that even better properties were obtainable by applying various additive elements. The C and N content of the product sheets was 30 ppm or less in all cases.

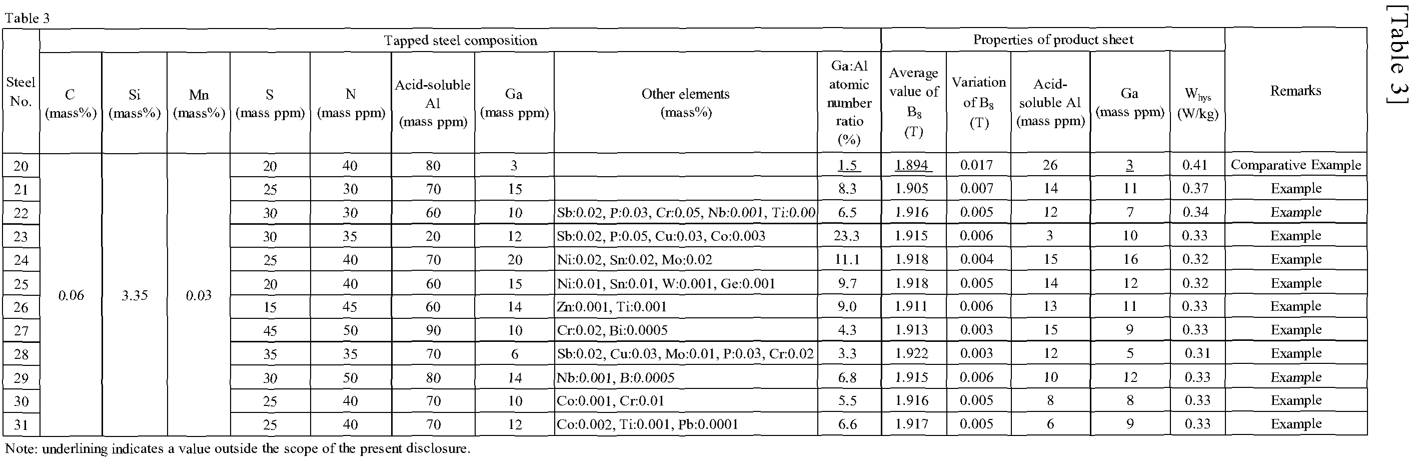

### INDUSTRIAL APPLICABILITY

According to the present disclosure, in producing a grain-oriented electrical steel sheet using an inhibitor-less method, it is possible to provide a grain-oriented electrical steel sheet that has stable and excellent magnetic properties throughout the entire length of the coil.

## Claims

1. A grain-oriented electrical steel sheet having a chemical composition containing, in mass%, Si: 2.0 % or more but 4.5 % or less and Mn: 0.01 % or more but 0.5 % or less, and in mass ppm, Se, Te, and O: each less than 50 ppm, S: less than 30 ppm, acid-soluble Al: 2 ppm or more but less than 30 ppm, Ga: 5 ppm or more but less than 80 ppm, with the balance being iron and inevitable impurity,
wherein B₈ in the rolling direction is 1.900 T or more, and hysteresis loss W_{hys} at B = 1.7 T satisfies the following expression (1), ${W}_{hys} \leq - 2.5 \times {B}_{8} + 5.15$ (1).

2. The grain-oriented electrical steel sheet according to claim 1, the chemical composition further containing, in mass%, one or more selected from the group consisting of
Ni: 1.50 % or less, Sn: 0.50 % or less, Sb: 0.50 % or less, Cu: 0.50 % or less, P: 0.50 % or less, Cr: 1.50 % or less, Mo: 0.50 % or less, B: 0.0050 % or less, Nb: 0.0100 % or less, Co: 0.0100 % or less, Ti: 0.0050 % or less, Zn: 0.050 % or less, Bi: 0.0200 % or less, W: 0.0030 % or less, Pb: 0.0010 % or less, Ge: 0.0010 % or less, As: 0.0010 % or less, and Ag: 0.0010 % or less.

3. A method of producing the grain-oriented electrical steel sheet according to claim 1 or 2, the method comprising:
casting a steel slab from molten steel having a chemical composition containing, in mass%, C: 0.08 % or less, Si: 2.0 % or more but 4.5 % or less, Mn: 0.01 % or more but 0.5 % or less, and in mass ppm, Se, Te and O: each less than 50 ppm, acid-soluble Al: 20 ppm or more but less than 100 ppm, S: less than 50 ppm, N: 80 ppm or less, and Ga in an amount relative to the concentration of acid-soluble Al, according to the following expression (2), $0.030 \times Al \times 2.58 \leq Ga \leq 1.000 \times Al \times 2.58$ (2)
with the balance being Fe and inevitable impurity; hot rolling the steel slab to obtain a hot-rolled sheet; subjecting the hot-rolled sheet to annealing and rolling to obtain a cold-rolled sheet having a final sheet thickness; subsequently carrying out primary recrystallization annealing; further carrying out secondary recrystallization annealing; and subsequently forming an insulating coating,
wherein the secondary recrystallization annealing is carried out such that, in a heating process, a residence time in a temperature range from 800 °C to 900 °C is 35 h or longer in a N₂ atmosphere, an Ar atmosphere, or a mixed atmosphere of N₂ and Ar, soaking is carried out at a maximum temperature exceeding 1150 °C for 3 h or longer in an atmosphere containing 5 vol% or more of H₂, and, in a cooling process, a residence time in a temperature range from 1100 °C to 900 °C is 10 h or longer.

4. The method of producing the grain-oriented electrical steel sheet according to claim 3, the chemical composition further containing, in mass%, one or more selected from the group consisting of
Ni: 1.50 % or less, Sn: 0.50 % or less, Sb: 0.50 % or less, Cu: 0.50 % or less, P: 0.50 % or less, Cr: 1.50 % or less, Mo: 0.50 % or less, B: 0.0050 % or less, Nb: 0.0100 % or less, Co: 0.0100 % or less, Ti: 0.0050 % or less, Zn: 0.050 % or less, Bi: 0.0200 % or less, W: 0.0030 % or less, Pb: 0.0010 % or less, Ge: 0.0010 % or less, As: 0.0010 % or less, and Ag: 0.0010 % or less.
